# EUROPEAN PATENT APPLICATION

(11) **EP 1 355 491 A2**
(43) Date of publication of application: **22.10.2003**
(21) Application number: 03008298.6
(22) Date of filing: 10.04.2003
(51) Int. Cl.: H04N 5/783

(54) **Apparatus for reproducing moving image stream with speed change and method thereof**

(30) Priority: 15.04.2002 KR 2002020299
(71) Applicant: ID Digital Co., Ltd., Bundang-gu, Seongnam-si, Gyeonggi-do (KR)
(72) Inventor: Kim, Young Ki, Paldal-gu, Suwon-si, Gyeonggi-do (KR); Ahn, Kwang Ho, Bundang-gu, Seongnam-si, Gyeonggi-do (KR); Min, Kyung Pa, Kangnam-gu, Seoul (KR)
(74) Representative: Müller, Eckhard, Dr.

(57) **Abstract**

An apparatus for reproducing moving image stream with speed change includes: a receiving means (301) for receiving a compressed moving image stream; a reconstruction means (304) for reconstructing an image from the compressed moving image stream; a generation means (305) for generating a still image from the reconstructed image; a recording means (303) for recording the generated still image; and a reproduction means (306) for extracting the recorded still image from the recording means (303) and reproducing the image in trick modes. Also, a method of reproducing moving image stream with speed change includes the steps of: receiving (301) a compressed moving image stream; storing (303) an image from the compressed moving image stream; generating (305) a still image from the reconstructed moving image and recoding the generated still image; and if a user requests to execute trick modes, extracting the recorded still image and executing the trick modes.

## Description

### BACKGROUND OF THE INVENTION

### 1. Field of the Invention

The present invention relates to an apparatus for reproducing moving image stream with speed change and a method thereof, capable of changing the reproduction speed of moving images.

### 2. Background of the Related Art

The following will describe general information related to the present invention and some of embodiments according to a related art.

An apparatus for reproducing moving image stream, for example PVR (Personal Video Recorder), receives a TS (Transport Stream) transmitted from satellite, cable or ground-wave broadcast, and stores the transport stream in a storing means like a HDD (Hard Disk Drive), and reads out broadcast data stored in the storing means, and finally sends the broadcast data to a display device.

As such, a user can watch a broadcast any time he/she wants, even though it might not the scheduled time for the broadcast, by using broadcast data stored in the storing means of the apparatus for reproducing moving image stream.

Another merit of the apparatus is that the user can watch the broadcast as many times as he/she wants.

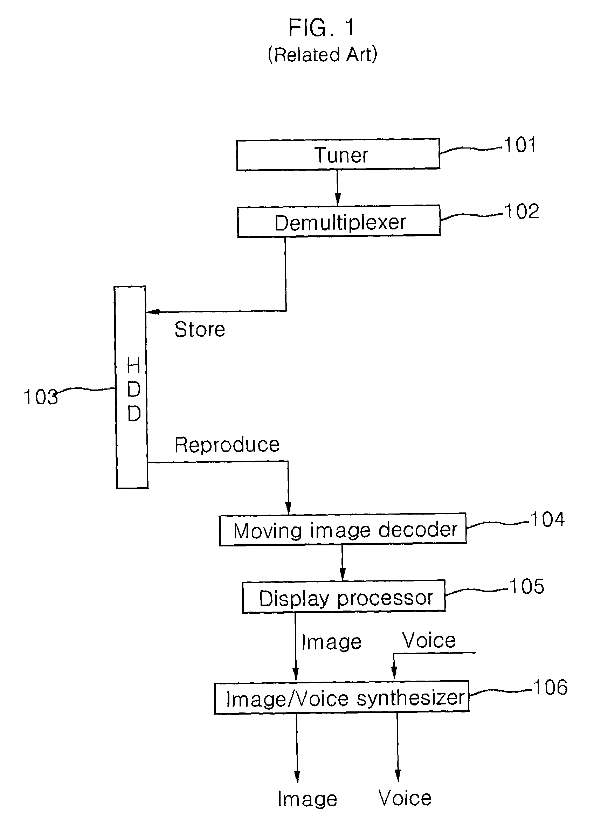

Fig. 1 illustrates an embodiment of the apparatus for reproducing moving image stream with speed change, focusing on how a compressed moving image stream is processed.

In other words, Fig. 1 is a block diagram illustrating a structure of a known apparatus for reproducing moving image stream with speed change.

Referring to Fig. 1, the PRV consists of a receiving means like a tuner 101 for receiving a transport stream (TS) that is transported; a demultiplexer 102 for inputting the transported TS to the tuner 101 and demultiplexing the inputted TS to a SPTS (Single Program Transport Stream); a storing means like a HDD 103 in which the SPTS demultiplexed by the demultiplexer 102 is stored; a reconstruction means like a moving image decoder 104 for reading a compressed moving image stream stored in the HDD 103 and reconstructing an image for the compressed moving image stream; a display processor 105 for inputting the reconstructed image by the moving image decoder 104 and processing a screen output signal for the reconstructed image; and an image/sound signal synthesizer 106 for synthesizing a screen output signal on a transported image from the display processor 105 and a voice signal transported from a voice processor (not shown) and outputting a synthesized image/voice signal.

It will be now explained how the user watches a broadcast stored in the storing means like the HDD 103 mounted in the apparatus for reproducing moving image stream with speed change.

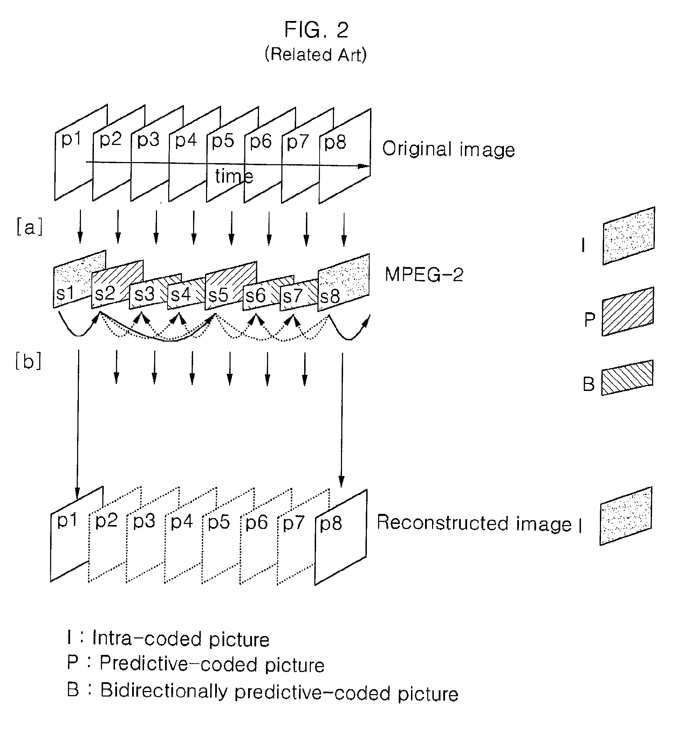

First of all, to enable the user to watch a broadcast stored in the HDD 103 of the apparatus for reproducing moving image stream with speed change, the received broadcast should be stored in the HDD 103 beforehand. In connection with this, a procedure for compressing and transporting an original image is explained with reference to Fig. 2.

Fig. 2 is a conceptual diagram of an image encoding/decoding procedure out of a moving image reproducing procedure in the known apparatus for changing speed of reproduction speed of moving image stream.

As depicted in Fig. 2, the original image p1 through p8 goes through a procedure [a], namely a moving image encoding procedure (i.e. MPEG-2 encoding) and becomes compressed data s1 through s8. This compressed data is then converted to a stream of data and broadcasted via satellite, cable or ground wave.

To provide further description on the MPEG-2 encoding procedure of [a], first of all, the encoding proceeds in the cited order of p1→p2→p5→p3→p4→p8→p6→p7, and each generates a compressed data, i.e. s1, s2, s5, s3, s4, s8, s6, and s7, respectively.

According to the nature of MPEG-2, s1 and s8 corresponding to an I-picture (Intra-coded picture) can be decoded independently, and s2 and s5 corresponding to an P-picture (Predictive-coded picture) are subordinated to a previous I-picture or P-picture, and s3 and s4 corresponding to a B-picture (Bidirectionally predictive-coded picture) are subordinated to a previous/later I-picture or P-picture.

In other words, since the P-pictures s2 and s5 are encoded being subordinated to s1 and s2, respectively, they are needed for the decoding process. Similarly, since the B-pictures s3 and s4 are subordinated to s2 and s5, they are needed for the decoding process.

To be short, as for the MPEG-2 encoded image, I-pictures decoded independently, but P- or B-pictures require previous or subsequent picture information to be decoded.

Particularly, Fig. 2[b] represents a decoding process for reconstructing the original image by using the encoded data from s1 through s8. The decoding process here proceeds following the same order as that of the encoding process in [a].

That is, the decoding takes places in the cited order of p1→p2→p5→p3→p4→p8→p6→p7 as in the encoding process.

As discussed in the process [a], I-, P-, and B-pictures are decoded according to their respective subordination to one another, using previous or subsequent picture information.

Speaking of the operating principles of the apparatus for reproducing moving image stream with speed change, the compressed moving image stream stored in the HDD 103 goes through the decoding process explained in [b] conducted by the moving image decoder 104 like a MPEG-2 decoder built in the apparatus, and the original image is reconstructed from the decoded image stream.

In case of executing a speed change playback mode in a forward direction at a request from the user by reproducing the compressed moving image stream stored in the HDD 103 in a 'playback mode' or 'fast forward (FF) mode' or 'slow forward (SF)', each picture is decoded following the exactly same sequence as the aforementioned encoding sequence for the original image.

However, there are some other cases that the pictures should be decoded in a reverse sequence of the encoding process on the original image, for example, if the user wants to execute the speed change playback in a backward direction involving a 'fast rewind (FR) mode' or 'slow rewind (SR) mode'.

More specifically speaking, if B- or P-pictures, not I-pictures, should be decoded first, previous or subsequent I- or P-pictures are necessary to reconstruct those pictures.

To this end, requested I- or P-pictures are searched in the compressed moving image stream, and then the decoding process should be performed on all of the B- or P-pictures to be decoded.

However, one of drawbacks of the MPEG-2 is that since the number of I- or P-pictures is not predetermined, the searching or decoding performance does not back up this. This explains why not all of the pictures available in the apparatus are decoded and reproduced but the independently decodable I-pictures only are decoded and reproduced.

As such, the moving images reproduced in the 'fast rewind (RF) mode' or 'slow rewind (SR) mode' are not smooth, and sometimes, the image stream is often broken off.

Especially for the compressed moving image stream where the I-pictures are inserted every several minutes or every several tens of minutes, its reproduced screen is also broken off with that much interval. As a consequence, the user is left with bad quality images.

Unfortunately, the speed change playback mode in the forward direction is not an exception. Because of the limitation on the decoding process capacity (i.e. decoding rate) of the moving image decoder like a MPEG-2, the playback speed in the fast forward mode is also influenced of the limitation.

Although one might use another kind of decoder with a higher process rate in order to increase the playback rate, it will only raise the cost of manufacture on the apparatus.

### SUMMARY OF THE INVENTION

An object of the invention is to solve at least the above problems and/or disadvantages and to provide at least the advantages described hereinafter.

Accordingly, one object of the present invention is to solve the foregoing problems by providing an apparatus for reproducing moving image stream with speed change and method thereof, capable of reconstructing an image for a received digital multi-media compressed stream by using a means for reconstructing a moving image, generating a compressed still image stream to enable an independent decoding process on each frame by using a means for generating a still image from the reconstructed image, and facilitating an application of changing reproduction speed modes (FF, SF, FR, SR, Pause, Playback) at a request of a user.

The foregoing and other objects and advantages are realized by providing an apparatus for reproducing moving image stream with speed change, including a receiving means for receiving a compressed moving image stream; a reconstruction means for reconstructing an image from the compressed moving image stream; a generation means for generating a still image from the reconstructed image; a recording means for recording the generated still image; a reproduction means for extracting the recorded still image from the recording means and reproducing the image in trick modes; a storing means for storing at least one of the compressed moving image stream and the generated still image; and a reconstruction means for reconstructing an encoded image that is recorded in the recording means.

According to another aspect of the invention, the method of reproducing moving image stream with speed change includes the steps of: receiving a compressed moving image stream; performing at least one of storing the compressed moving image stream and reading the compressed moving image stream received; reconstructing an image from the compressed moving image stream having been read; generating a still image from the reconstructed moving image and recoding the generated still image; reconstructing the encoded and recorded still image; and if a user requests to execute trick modes, extracting the reconstructed still image and executing the trick modes.

Accordingly, it is possible to reconstruct an image for a received digital multi-media compressed stream by using the means for reconstructing a moving image, and generate a compressed still image stream to enable an independent decoding process on each frame by using the means for generating a still image from the reconstructed image, thereby facilitating an application of different reproduction speed modes (FF, SF, FR, SR, Pause, Playback) at a request of a user.

According to another aspect of the invention, it is possible to reconstruct an image for a received digital multi-media compressed stream by using the means for reconstructing a moving image and generate a compressed still image stream to enable an independent decoding process on each frame by using the means for generating a still image from the reconstructed image, thereby enabling a user to use a frame advance function wherein the still image goes forward or backward one picture at a time.

According to another aspect of the invention, by encoding/decoding the still image, it is possible to eliminate the subordination of one image (picture) to other images (pictures) by reconstructing each image (picture), whereby one can obtain a high data transmission rate and perform the above process on a limited resource, e.g. memory.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a block diagram briefly depicting the structure of a known apparatus for reproducing moving image stream with speed change according to a related art;

Fig. 2 is a conceptual diagram representing an encoding/decoding process on a transported image out of a process for reproducing a moving image with help of the known apparatus for reproducing moving image stream with speed change;

Fig. 3 is a block diagram briefly depicting the structure of a known apparatus for reproducing moving image stream with speed change according to the present invention;

Fig. 4 is a flow chart explaining a procedure of executing speed-change reproduction modes for moving image stream according to a method of the present invention;

Fig. 5 is a conceptual diagram representing an encoding/decoding process on a transported image out of a process for reproducing a moving image with help of the apparatus for reproducing moving image stream with speed change of the present invention; and

Figs. 6 and 7 are flow charts explaining a procedure of executing a speed-change reproduction modes for moving image stream according to another embodiment, to which the method of reproducing moving image stream with speed change.

### DETAILED DESCRIPTION OF PREFERRED EMBODIMENTS

The following detailed description will present an apparatus for reproducing moving image stream with speed change and a method thereof according to a preferred embodiment of the invention in reference to the accompanying drawings.

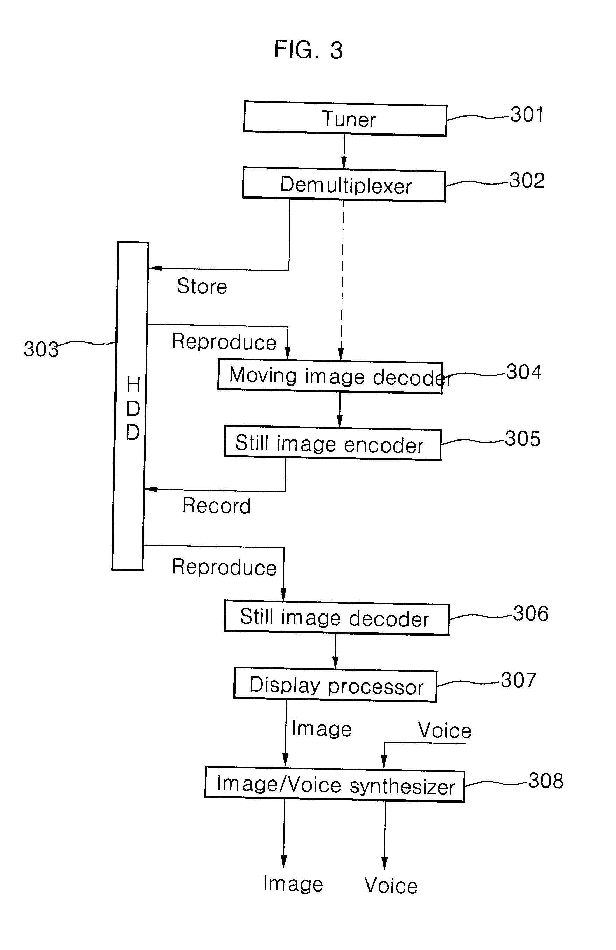

Fig. 3 is a block diagram briefly depicting the structure of a known apparatus for reproducing moving image stream with speed change according to the present invention.

Referring to Fig. 3, the apparatus for reproducing moving image stream with speed change includes: a receiving means like tuner 301 for receiving a transport stream (TS) that is transported; a demultiplexer 302 for inputting the transported TS to the tuner 301 and demultiplexing the inputted TS to a SPTS (Single Program Transport Stream); a storing means like HDD (Hard Disk Drive) 303 in which the SPTS demultiplexed by the demultiplexer 302 is stored; a reconstruction means like moving image decoder 304 (e.g. MPEG-2 decoder) for reading a compressed moving image stream stored in the HDD 303 and reconstructing an image for the compressed moving image stream; a still image generator like still image encoder 305 (e.g. JPEG encoder) for encoding a still image in frame unit from the reconstructed image by the reconstruction means like moving image decoder 304 and recording the encoded still image in the recording means like HDD 303; a reproduction means like still image decoder 306 (e.g. JPEG decoder) for reading the encoded still image from the HDD 303 and reconstructing the read still image in frame unit; a display processor 307 for inputting the reconstructed still image by the reproduction means like still image decoder 306 and processing a screen output signal for the reconstructed still image; and an image/sound signal synthesizer 308 for synthesizing a screen output signal on a transported image from the display processor 307 and a voice signal transported from a voice processor (not shown) and outputting a synthesized image/voice signal.

According to another embodiment of the present invention, the apparatus includes the receiving means like the tuner 301 for receiving a transport stream (TS) that is transported; the demultiplexer 302 for inputting the transported TS to the tuner 301 and demultiplexing the inputted TS to a SPTS (Single Program Transport Stream); and the reconstruction means like the moving image decoder 304 (e.g. MPEG-2 decoder) for reconstructing an image for the compressed moving image stream outputted from the demultiplexer 302.

Turning now to an operational method of the apparatus for reproducing moving image stream with speed change according to the present invention, explained below is a procedure for executing speed-change reconstruction modes at a request of the user, using a still image stream recorded in the recording means like the HDD 303.

As discussed before, one of problems with the conventional technology was that the image in the speed-change reconstruction modes was often cut off because of the application of the forward compression method, i.e. moving image encoding and decoding method (such as, MPEG-2). However, this problem can be easily overcome by introducing the still image generating means and reproduction means (still image encoder/decoder), thereby providing a smooth image stream to the user when providing the speed-change reproduction modes.

The operational method of the apparatus for reproducing moving image stream with speed change can be diverse, depending on how it is embodied.

The following describes three basic embodiments thereof. Further details on each embodiment will be followed later.

First of all, there is a method of reproducing moving image stream with speed change, including the steps of: storing all of the compressed moving image stream having been received in the storing means; decoding the compressed moving image stream having been stored in the storing means; recording part of the compressed still image stream in the recording means; and if the user request to execute the trick modes, reading the compressed still image stream having been recorded in the recording means, not the compressed moving image stream, thereby reconstructing an image from the read image stream.

Another method of reproducing moving image stream with speed change is characterized of storing/recording all of the compressed moving image stream and all of the compressed still image stream having been received in the storing/recording means.

According to still another method of reproducing moving image stream with speed change, not the entire compressed moving image stream having been received is stored in the storing means. Instead, it is converted to the compressed still image stream and this compressed still image stream having been converted is recorded in the recording means.

### [Embodiment 1]

As aforementioned, the method of reproducing moving image stream with speed change according to this embodiment includes the steps of: storing all of the compressed moving image stream having been received in the storing means; decoding the compressed moving image stream having been stored in the storing means; recording part of the compressed still image stream in the recording means; and if the user request to execute the trick modes, reading the compressed still image stream having been recorded in the recording means, not the compressed moving image stream, thereby reconstructing an image from the read image stream.

More details on this embodiment are now provided with reference to Figs. 3 through 5.

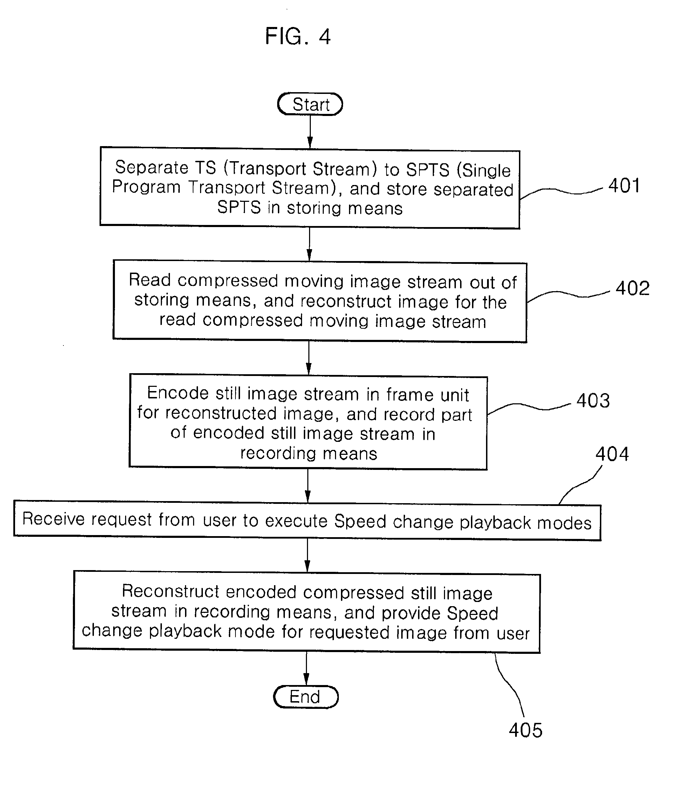

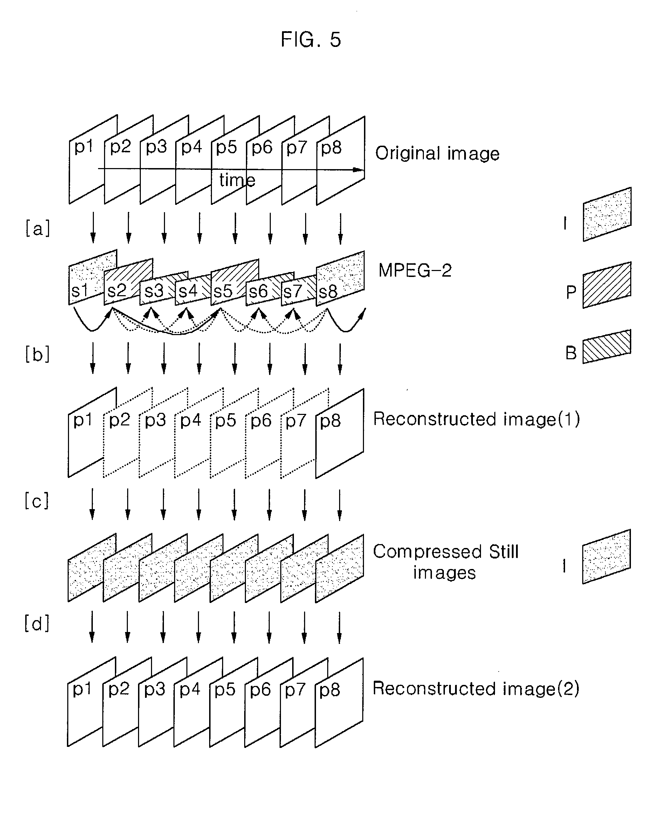

Fig. 4 is a flow chart explaining the procedure of executing the speed-change reproduction modes for moving image stream according to the method of the present invention; and Fig. 5 is a conceptual diagram representing the encoding/decoding process on the transported image out of the process for reproducing a moving image with help of the apparatus for reproducing moving image stream with speed change.

To begin with, the demultiplexer 302 receives an input of the transport stream (TS), and separates (demultiplexes) the inputted TS to single program transport stream (SPTS).

Then, the demultiplexed SPTS is stored in the storing means like the HDD 303 (S401).

The image reconstruction means like the moving image decoder 304 (e.g. MPEG-2 decoder) reads the compressed moving image stream from the storing means like the HDD 303, and reconstructs an image from the read image stream (S402). The image reconstruction process corresponds to Fig. 5[b], and the process [a] and [b] of Fig. 5 is basically identical with those of the related art.

Meanwhile, the still image generator like the still image encoder 305 (e.g. JPEG-encoder supporting the JPEG format) encodes a still image stream in frame unit for the reconstructed image from the moving image decoder 304, and records the compressed still image stream having been encoded in the recording means like the HDD 303 (S403).

The above process corresponds to Fig. 5[c]. Here, the p1 through p8 images, they having gone through the MPEG-2 decoding process, are encoded by the still image encoder 305 like the JPEG-encoder to become independently decodable (without referring to other pictures) similar to the I-picture of MPEG-2.

As such, the encoded still image data at the still image encoder 305, regardless of other previous or subsequent images (pictures), become decodable independently.

Here, the storing means for storing the compressed moving image stream at step 401 and the recording means for recording the compressed still image stream at step 403 could be stored/recorded in the same recording medium or different recording mediums from each other. In this embodiment, the HDD 303 was used for both the storing means and the recording means.

Not all of the compressed still image stream can be recorded in the recording means at step 403, meaning there is a limit on its recordation because of a predetermined time and capacity. In this way, the recording means can be more efficiently used.

For instance, in case the recording process should comply with the predetermined time (e.g. 1 hour), all of the compressed still image stream can be recorded in the recording means for one hour. If the amount of the compressed still image stream to be recorded takes more than 1 hour, however, according to the FIFO rule, the old still image stream is deleted, and a newly generated compressed still image stream is recorded in the recording means. Overall, the compressed still image stream does not last than the predetermined time (i.e. 1 hour).

When the user request to execute the trick modes (S404), the still image decoder 306 like the JPEG-decoder reconstructs the compressed still image stream having been encoded and recorded in the recording means like the HDD 303, and provides the trick modes to the requested image from the user (S405).

To explain more, the compressed moving image stream stored in the storing means like the HDD 303 is decoded, and part of compressed still image stream is generated therefrom, and the generated still image stream is recorded in the recording means like the HDD 303. Therefore, when the user request to execute the trick modes, the reconstruction process takes places by reading the compressed still image stream recorded in the recording means, not the compressed moving image stream.

In general, the trick modes the user requests include the 'fast rewind (FR)', 'slow rewind (SR)', 'fast forward (FF)', 'slow forward (SF)', 'Pause', and 'Playback'.

In case of F/F and F/Rewind modes are involved, the decoder, it having been set in the Buffer-Controller mode or I or I & P scan mode, pumps the stored MPEG stream to a MPEG decoding system at the same speed as the storing the MEPG stream or faster or pumps data while jumping inside the stream at the same time.

Also, in case of the slow motion, the decoder pumps data to the MPEG decoding system at a slower speed than the storing one, or the same result can be obtained simply by repeating each picture.

The process for reconstructing the compressed still image stream having been encoded at the still image decoder 306 corresponds to Fig. [d]. For example, the original images p1 through p8 are reconstructed by decoding the JPEG format-encoded image data.

As discussed before, by encoding/decoding the still image, it is possible to eliminate the subordination of one image (picture) to other images (pictures) by reconstructing each image (picture). If it is done so, the screen will no further broken off even in the fast/slow rewind modes, but providing the user with a smooth screen similar to the one in the playback.

Moreover, in the fast forward mode, since there is no subordination between images (pictures), meaning an independent decoding process is not possible, one can obtain a high data transmission rate and perform the above process on a limited resource, e.g. memory.

It will be more helpful to explain more about the features of the present invention, comparing to the problems the conventional technology has.

To provide the trick modes for the requested image from the user, the conventional apparatus and method says, as shown in Fig. 1, the compressed moving image stream having been received is first stored in the storing means like the HDD 103, and the apparatus reads the compressed moving image stream stored in the storing means at the request of the trick modes from the user, and decodes the compressed moving image stream having been read by the moving image decoder 104.

What went wrong about the above was that when the trick mode was set on the playback, fast/slow forward, and pause, the user was provided wit a smooth moving image. However, in the fast/slow rewind modes, only I-pictures were reproduced and the moving image was often broken off due to the limitation on the decoder capacity or memory.

On the other hand, according to the apparatus for reproducing moving image stream with speed change and the method thereof based on the present invention, the still image encoder 305 and the still image decoder 306 are inserted at the rear end of the moving image decoder 304. Here, the still image encoder 305 encodes the decoded image by the moving image decoder 304 to the still image again, and records the encoded still image in the recording means like the HDD 303, and at the request of the trick modes, the encoded data is read from the storing means. Then, the still image decoder 304 decodes the read data, and the moving image is duly reproduced.

In this procedure, the still image encoder 305 encodes the reconstructed image at the moving image decoder 304 to the independently decodable form just like the I-pictures of MPEG-2. As the still image decoder 306 reconstructs the image, each picture can be decoded independently (without referring to other pictures), and the 'fast forward' or 'rewind' function can be more facilitated.

Further, the trick modes requested from the user can include a frame advance function wherein the still image goes forward or backward one picture at a time.

That is, according to the method for reproducing moving image stream with speed change of the present invention, each encoded picture by the still image encoder 305 is decodable independently at the still image decoder 306, whereby the frame advance function can be further provided to the user by reconstructing the pictures in frame unit.

After going through this procedure, the reconstructed image signal at the still image decoder 306 is transported to the display processor 307.

The display processor 307 processes the image output signal for the transported image and transports it to the image/voice synthesizer 308.

Then, the image/voice synthesizer 308 synthesizes the screen output signal for the transported image from the display processor 307 and the transported voice signal from a voice processor (not shown), and outputs the signals.

The screen output signal that is outputted from the image/voice synthesizer 308 is displayed to the user through an image output like a television set, and the voice output signal is sent to the user through a speaker.

### [Embodiment 2]

The method of reproducing moving image stream with speed change of this embodiment is characterized of storing/recording all of the compressed moving image stream and all of the compressed still image stream having been received in the storing/recording means.

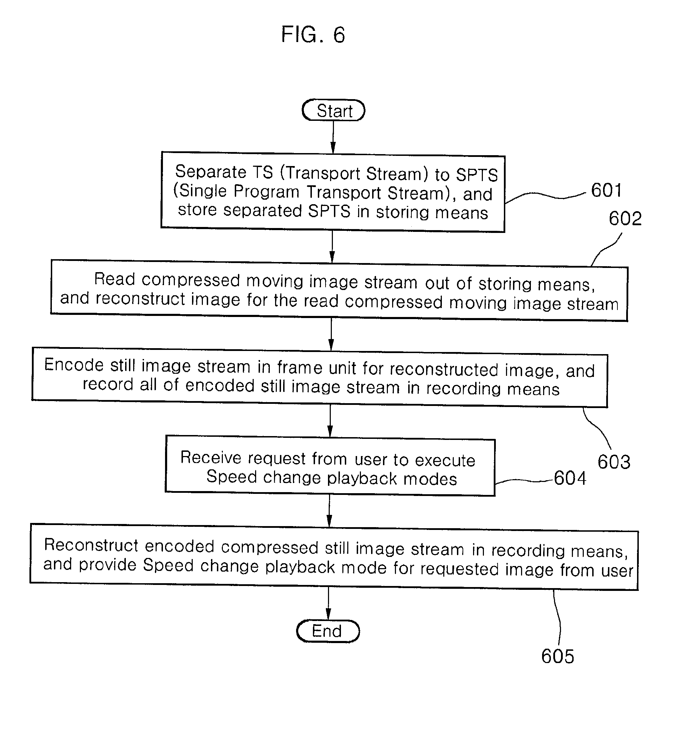

Turning now to Figs. 3 and 6, more details on this second embodiment will be followed. Figs. 6 is a flow chart explaining a procedure of executing a speed-change reproduction modes for moving image stream according to another embodiment, to which the method of reproducing moving image stream with speed change.

Since the encoding and decoding processes on the moving image and the still image are pretty much identical with ones explained in the first embodiment, only the things that are different from the first embodiment will be described here.

To begin with, the demultiplexer 302 receives an input of the transport stream (TS), and separates (demultiplexes) the inputted TS to single program transport stream (SPTS).

Then, the demultiplexed SPTS is stored in the storing means like the HDD 303 (S601).

The moving image decoder 304 (e.g. MPEG-2 decoder) reads the compressed moving image stream from the storing means like the HDD 303, and reconstructs an image from the read image stream (S602).

The image reconstruction process at step 602 corresponds to Fig. 5[b], and the process [a] and [b] of Fig. 5 is basically identical with those of the related art.

Meanwhile, the still image encoder 305 (e.g. JPEG-encoder supporting the JPEG format) encodes the still image stream in frame unit for the reconstructed image from the moving image decoder 304, and records the compressed still image stream having been encoded in the recording means like the HDD 303 (S603).

Even though the recording means might need a little bit more recording capacity since all of the compressed still image stream having been encoded is recorded in the recording means like the HDD 303, it is still possible to meet the user's request for the trick modes fast by recording every possible compressed still image stream in all of the trick modes the user might request.

The above process corresponds to Fig. 5[c]. Here, the p1 through p8 images, they having gone through the MPEG-2 decoding process, are encoded by the still image encoder 305 like the JPEG-encoder to become independently decodable (without referring to other pictures) similar to the I-picture of MPEG-2.

As such, the encoded still image data at the still image encoder 305, regardless of other previous or subsequent images (pictures), become decodable independently.

When the user request to execute the trick modes (S604), the still image decoder 306 like the JPEG-decoder reconstructs the compressed still image stream having been encoded and recorded in the recording means like the HDD 303, and provides the trick modes to the requested image from the user (S605).

Later, the reconstructed image signal at the still image decoder 306 is transported to the display processor 307. The display processor 307 processes the image output signal for the transported image and transports it to the image/voice synthesizer 308.

Then, the image/voice synthesizer 308 synthesizes the screen output signal for the transported image from the display processor 307 and the transported voice signal from a voice processor (not shown), and outputs the signals. Here, the screen output signal that is outputted from the image/voice synthesizer 308 is displayed to the user through an image output like a television set, and the voice output signal is sent to the user through a speaker.

### [Embodiment 3]

According to the method of reproducing moving image stream with speed change of this embodiment, not the entire compressed moving image stream having been received is stored in the storing means. Instead, it is converted to the compressed still image stream and this compressed still image stream having been converted is recorded in the recording means.

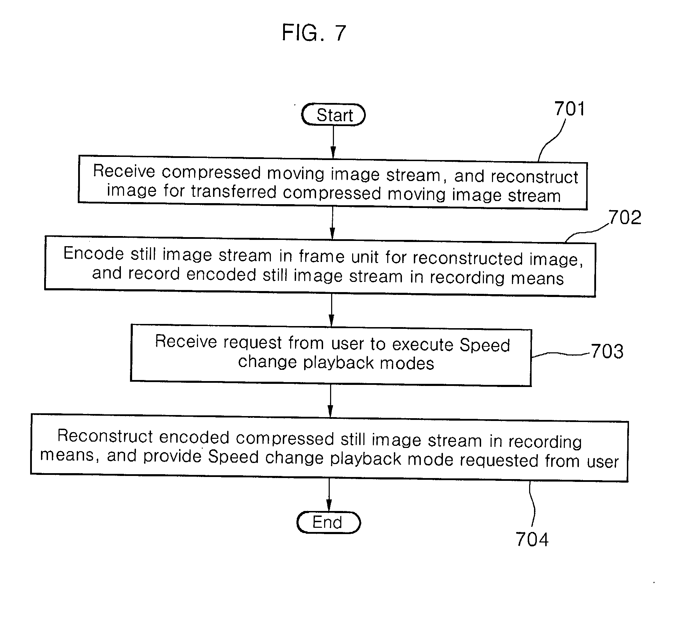

The present embodiment will be further detailed with reference to Figs. 3 and 7.

Figs. 7 is a flow chart explaining a procedure of executing a speed-change reproduction modes for moving image stream according to another embodiment, to which the method of reproducing moving image stream with speed change.

Since the encoding and decoding processes on the moving image and the still image are pretty much identical with ones explained in the first embodiment, only the things that are different from the first embodiment will be described here.

First, the moving image decoder 304 like the MPEG-2 receives the compressed moving image stream and reconstructs an image for the compressed moving image stream having been transported (S701).

At this time, the moving image decoder 304 can receive the compressed moving image stream directly from the demultiplexer 302 or through a predetermined buffer (not shown).

Also, the moving image decoder 304 can use part of the recording means like the HDD 303 instead of the predetermined buffer (not shown).

Later, the still image encoder 305 like the JEPG-encoder encodes the still image stream in frame unit for the reconstructed image at the moving image decoder 304, and records the compressed still image stream having been encoded in the recording means 303 (S702).

And if the user requests to execute the trick modes (S703), the still image decoder 306 like the JPEG-decoder reconstructs the encodes still image stream recorded in the HDD 303, and provides the requested trick modes to the user (S704).

Following the above procedure, that is, recording only the compressed still image stream having been encoded in the recording means like the HDD 303 and not storing the compressed moving image stream having been received in the storing means like the HDD 303, one can use the HDD 303 more efficiently.

Afterwards, the reconstructed image signal at the still image decoder 306 is transported to the display processor 307.

The display processor 307 processes the image output signal for the transported image and transports it to the image/voice synthesizer 308. Then, the image/voice synthesizer 308 synthesizes the screen output signal for the transported image from the display processor 307 and the transported voice signal from a voice processor (not shown), and outputs the signals. Here, the screen output signal that is outputted from the image/voice synthesizer 308 is displayed to the user through an image output like a television set, and the voice output signal is sent to the user through a speaker.

While the invention has been shown and described with reference to certain preferred embodiments thereof, it will be understood by those skilled in the art that various changes in form and details may be made therein without departing from the spirit and scope of the invention as defined by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. An apparatus for reproducing moving image stream with speed change, the apparatus comprising:
a receiving means for receiving a compressed moving image stream;
a reconstruction means for reconstructing an image from the compressed moving image stream;
a generation means for generating a still image from the reconstructed image;
a recording means for recording the generated still image; and
a reproduction means for extracting the recorded still image from the recording means and reproducing the image in trick modes.

2. The apparatus according to claim 1, further comprising:
a storing means for storing at least one of the compressed moving image stream having been received and the generated still image.

3. The apparatus according to claim 1 or 2, wherein the recording means and the storing means can be same or different from each other.

4. The apparatus according to claim 1, further comprising:
a reconstruction means for reconstructing an encoded image that is recorded in the recording means.

5. The apparatus according to claim 1, wherein the means for generating a still image is a JPEG-encoder.

6. A method of reproducing moving image stream with speed change, the method comprising the steps of:
receiving a compressed moving image stream;
storing an image from the compressed moving image stream;
generating a still image from the reconstructed moving image and recording the generated still image; and
if a user requests to execute trick modes, extracting the recorded still image and executing the trick modes.

7. The method according to claim 6, further comprising the step of:
storing the compressed moving image stream having been received.

8. A method of reproducing moving image stream with speed change, the method comprising the steps of:
receiving a compressed moving image stream;
performing at least one of storing the compressed moving image stream and reading the compressed moving image stream having been received;
reconstructing a still image from the compressed moving image stream having been read;
generating a still image from the reconstructed moving image and recording the generated still image;
reconstructing the encoded and recorded still image; and
if a user requests to execute trick modes, extracting the reconstructed still image and executing the trick modes

9. The method according to claim 8, wherein at the step for generating the still image, a still image encoder encodes the still image to make the still image to be decodable independently without referring to other pictures.

10. The method according to claim 8, wherein at the step for executing the trick modes after extracting the still image, the still image is decoded in frame or picture unit.

11. The method according to claim 6 or claim 8, wherein the step for recording the generated still image is continued for a predetermined time or within a predetermined capacity.

12. The method according to claim 8, wherein the encoded still image is generated from a reconstructed image.

13. The method according to claim 6 or claim 12, wherein all or part of the encoded still image having been generated is recorded.
